# EUROPEAN PATENT APPLICATION

(11) **EP 4 024 201 A1**
(43) Date of publication of application: **06.07.2022**
(21) Application number: 19946645.9
(22) Date of filing: 29.09.2019
(51) Int. Cl.: G06F 8/41

(54) **FRONT-END APPLICATION ORCHESTRATION METHOD, APPARATUS, ELECTRONIC DEVICE, MEDIUM AND PROGRAM PRODUCT**

(71) Applicant: Siemens Aktiengesellschaft, 80333 München (DE)
(72) Inventor: GAO, Liang, Beijing 10000 (CN); WANG, Wenke, Beijing 100102 (CN); LI, Qiang, Beijing 100102 (CN)
(74) Representative: Isarpatent
(86) International application number: PCT/CN2019/109249
(87) International publication number: WO 2021/056594

(57) **Abstract**

A front-end application orchestration method, an apparatus, an electronic device, a medium and a program product. The front-end application orchestration method comprises: reading and parsing an orchestration file stored in advance, determining all subpages cited by a front-end application to be orchestrated; for each subpage, determining metadata of the subpage according to the orchestration file; orchestrating the front-end application on the basis of all determined subpages.

## Description

### Technical Field

The present disclosure generally relates to the field of network technologies, and in particular, to a front-end application orchestration method and apparatus, an electronic device, a medium, and a program product.

### Background Art

Microservices have now become the mainstream methodology of extensible system architectures. During the implementation of a microservice architecture, it is favorable to create an integrated application to keep services small, independent, and reusable. This is also applicable to a front-end application architecture. However, it becomes more complex when microservices need to be used as building blocks for a front-end solution. The problem of how to use dozens or even hundreds of microservices to build a unified website or a mobile application occurs.

### Summary of the Invention

The brief summary of the present invention is given below to provide a basic understanding of some aspects of the present invention. It should be understood that the summary is not an exhaustive summary of the present invention. The summary is neither intended to determine the key or important part of the present invention, nor to limit the scope of the present invention. The object thereof is merely to give some concepts in a simplified form, as a prelude to the more detailed description presented later.

In view of this, the present disclosure proposes a solution in which subpages from different front-end applications are used to orchestrate a front-end application, to build a micro-frontend architecture.

According to an aspect of the present disclosure, a front-end application orchestration method is provided, the method including: reading and parsing a pre-stored orchestration file, to determine all subpages to which a front-end application that is to be orchestrated refers; for each subpage, determining metadata of the subpage based on the orchestration file; and orchestrating the front-end application based on all the determined subpages.

Optionally, in one example of the above aspect, before the reading and parsing a pre-stored orchestration file, the method further includes: parsing a route of an existing front-end application, to extract metadata of a subpage of each existing front-end application and store the metadata as registration information.

Optionally, in one example of the above aspect, the orchestration file defines a subpage to which at least one front-end application refers and metadata of each subpage. The metadata of each subpage defined in the orchestration file is determined based on stored registration information.

Optionally, in one example of the above aspect, the determining metadata of the subpage based on the orchestration file at least includes: determining a name of the subpage and a route of the subpage based on the orchestration file.

Optionally, in one example of the above aspect, the determining metadata of the subpage based on the orchestration file further includes at least one of the following operations: determining a value of a configuration parameter for the subpage based on the orchestration file; and generating authentication and identification information for the subpage.

Optionally, in one example of the above aspect, orchestrating the front-end application based on all the determined subpages includes: generating a framework of a main page of the front-end application based on a pre-stored application template or a user-defined application template; filling all the determined subpages into a content area of the framework, and adding a route of each subpage to a navigation panel of the framework; and invoking a compiler corresponding to each subpage to compile the subpage, to generate a front-end application package that is to be deployed. For one or more subpages belonging to the same existing front-end application, a corresponding compiler is used to separately compile each of the one or more subpages or compile the plurality of subpages together.

Optionally, in one example of the above aspect, before the front-end application package that is to be deployed is generated, orchestrating the front-end application based on all the determined subpages further includes: generating global identification and authentication information of the front-end application.

Optionally, in one example of the above aspect, the method further includes: deploying the front-end application package that is to be deployed in an application container or a mobile application store.

According to another aspect of the present disclosure, a front-end application orchestration apparatus is provided, the apparatus including: a subpage determination unit configured to read and parse a pre-stored orchestration file, to determine all subpages to which a front-end application that is to be orchestrated refers; a metadata determination unit configured to: for each subpage, determine metadata of the subpage based on the orchestration file; and an orchestration unit configured to orchestrate the front-end application based on all the determined subpages.

Optionally, in one example of the above aspect, the apparatus further includes: an initialization unit configured to parse a route of an existing front-end application, to extract metadata of a subpage of each existing front-end application and store the metadata as registration information.

Optionally, in one example of the above aspect, the orchestration file defines a subpage to which at least one front-end application refers and metadata of each subpage, where the metadata of each subpage defined in the orchestration file is determined based on stored registration information.

Optionally, in one example of the above aspect, the metadata determination unit is further configured to: determine a name of the subpage and a route of the subpage based on the orchestration file.

Optionally, in one example of the above aspect, the metadata determination unit is further configured to perform at least one of the following operations: determining a value of a configuration parameter for the subpage based on the orchestration file; and generating authentication and identification information for the subpage.

Optionally, in one example of the above aspect, the orchestration unit is further configured to: generate a framework of a main page of the front-end application based on a pre-stored application template or a user-defined application template; fill all the determined subpages into a content area of the framework, and add a route of each subpage to a navigation panel of the framework; and invoke a compiler corresponding to each subpage to compile the subpage, to generate a front-end application package that is to be deployed. For one or more subpages belonging to the same existing front-end application, a corresponding compiler is used to separately compile each of the one or more subpages or compile the plurality of subpages together.

Optionally, in one example of the above aspect, the orchestration unit is further configured to: generate global identification and authentication information of the front-end application. Optionally, in one example of the above aspect, the apparatus further includes: a deployment unit configured to deploy the front-end application package that is to be deployed in an application container or a mobile application store.

According to another aspect of the present disclosure, an electronic device is provided, the electronic device including: at least one processor; and a memory coupled to the at least one processor, where the memory is configured to store instructions that, when executed by the at least one processor, cause the processor to perform the method described above.

According to another aspect of the present disclosure, a non-transitory machine-readable storage medium is provided, which stores executable instructions that, when executed, cause the machine to perform the method described above.

According to another aspect of the present disclosure, a computer program is provided, the computer program including computer executable instructions that, when executed, cause at least one processor to perform the method described above.

According to another aspect of the present disclosure, a computer program product is provided, which is tangibly stored in a computer-readable medium and includes computer executable instructions that, when executed, cause at least one processor to perform the method described above.

According to the method and the apparatus in the present disclosure, there is provided a solution in which subpages from different front-end applications are used to orchestrate a front-end application, to build a micro-frontend architecture. Both earlier front-end applications developed using conventional languages and new front-end applications developed recently using new languages may be used to build a composite front-end application. The front-end application built in this manner is easy to be managed and deployed, and can reduce development costs.

A front-end application orchestrated according to the method and the apparatus in the present disclosure is independent from a platform, and therefore can be run on a wide variety of types of front-end browsers.

### Brief Description of the Drawings

The foregoing and other objectives, features, and advantages of the present invention can be more easily understood with reference to the following descriptions of embodiments of the present invention in conjunction with the accompanying drawings. Components in the accompanying drawings are merely for illustrating the principle of the present invention. In the accompanying drawings, the same or similar technical features or components are represented by using the same or similar reference signs.
FIG. 1 is a schematic diagram of a page framework of an application;
FIG. 2 is a flowchart of an exemplary process of a front-end application orchestration method according to an embodiment of the present disclosure;
FIG. 3 is a flowchart of an exemplary process of an operation in block S206;
FIG. 4 is a block diagram of an exemplary configuration of a front-end application orchestration apparatus according to an embodiment of the present disclosure;
FIG. 5 is a block diagram of an exemplary configuration of a front-end application orchestration system according to an embodiment of the present disclosure; and
FIG. 6 is a block diagram of an electronic device for front-end application orchestration according to an embodiment of the present disclosure.

**Reference signs**

| | | | |
|---|---|---|---|
| 100: | Page framework of application | 102: | Page header |
| 104: | Content area | 106: | Navigation panel |
| S201, S202, S204, S206, | | 200: | Front-end applicationorchestration method |
| S208, S2062, S2064, S2066, | | | |
| and S2068: | Steps | 400: | Front-end application orchestration apparatus |
| 402: | Subpage determination | 404: | Metadata |
| | unit | | determination unit |
| 406: | Orchestration unit | 401: | Initialization unit |
| 408: | Deployment unit | 500: | Front-end application orchestration system |
| 501, 502, and 503: | Existing front-end applications | 5022, and 5032: 5012, | Routes |
| 504: | Registration center | 505: | Orchestrator module |
| 506: | Orchestration file | 507: | Layout module |
| 5014, 5024, and 5034: | Compilers | 509: | Application container |
| 5091, 5092, ..., and 509m: | Front-end applications | A1, C2, A2, An, B1, B2, Bn, C1,and Cn: | Subpages |
| 510: | Message bus | 511: | Local memory |
| 602: | Processor | 604: | Memory |
| 600: | Electronic device | | |

### Detailed Description of Embodiments

The subject matter described herein are now discussed with reference to exemplary implementations. It should be understood that the discussion of these implementations is merely intended to help a person skilled in the art to better understand and implement the subject matter described herein, but not to limit the protective scope, applicability or examples set forth in the claims. The functions and arrangement of the discussed elements can be changed without departing from the protective scope of the present disclosure. Various processes or components may be omitted, replaced, or added in various examples as required. For example, the described method may be performed in an order different from the one described, and the steps may be added, omitted, or combined. In addition, the features described in some examples can also be combined in other examples.

As used herein, the term "include" and variants thereof represent an open term, which means "including but not limited to". The term "based on" represents "at least partially based on". The terms "an embodiment" and "the embodiment" represent "at least one embodiment". The term "another embodiment" represents "at least one other embodiment". The terms "first", "second", and the like may refer to different or the same objects. Other definitions, whether explicit or implicit, can be included below. Unless expressly specified in the context, the definition of a term is consistent throughout the specification.

The present disclosure proposes a solution in which pages from different front-end applications are used for orchestration to build a micro-frontend system. An orchestration language is defined based on grouped pages, and these grouped pages divide an application into logic units for ease of management and deployment. An application grouping model may be generated by interpreting and parsing an orchestration file, compiled into a deployable front-end application, and then may be deployed in a web container.

First, some definitions that would be used in the present specification are given.

Microservice: A microservice architecture is a methodology for developing a single application as a collection of small services. Each small service is run in its own process and communicates via a lightweight mechanism, and is usually used as an HTTP resource application programming interface. These services are built by a fully automated deployment machine based on service capabilities and can be deployed independently.

Orchestration: Orchestration is the automated configuration, coordination, and management of computer systems and software.

Front-end web deployment: Front-end web development is an operation of transforming data to a graphical interface, so that users can view data and perform data interaction through digital interactions using HTML, CSS, and JavaScript.

Micro-frontend: Micro-frontends are microservice-like architectures that apply the concept of microservices to the browser side, and break down a single-purpose web application into a plurality of small front-end applications. Each front-end application may be run, developed, and deployed independently.

In the past, single-page legacy front-end applications built by Backbone.js, Angular.js, Vue.js1, etc. are already run online with no new features. For such front-end applications, there is no need to take time and effort for rewriting. In the meantime, some new front-end applications are built based on new frameworks, such as Angular 7, Vue 2, and React 12. How to use these legacy front-end applications or new front-end applications to build a composite front-end application becomes a big challenge.

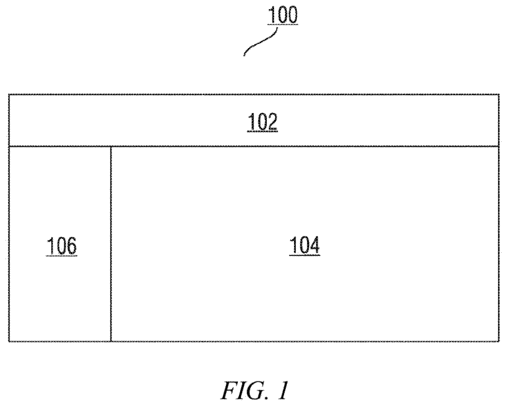

Generally, a typical feature of a current front-end application is that routes are allocated based on a framework architecture, where the framework may allocate a route to a corresponding component. FIG. 1 is a schematic diagram of a current page framework 100 of a front-end application. A front-end framework defines a skeleton of a page. A page header is in block 102. Block 104 is a content area into which each root component may be filled, and this part of the content would be visualized as a subpage. Block 106 is a navigation panel that can control routes between subpages. The present disclosure proposes a solution in which subpages from different front-end applications are used to orchestrate a front-end application, to build a micro-frontend architecture.

A front-end application orchestration method and apparatus according to the embodiments of the present disclosure are described now in conjunction with the accompanying drawings.

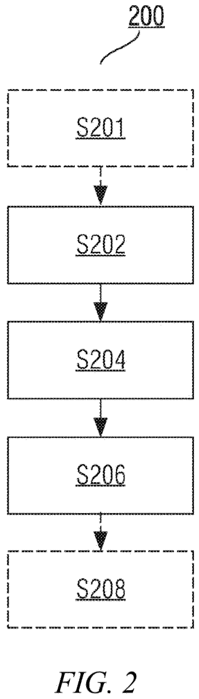

FIG. 2 is a flowchart of an exemplary process of a front-end application orchestration method 200 according to an embodiment of the present disclosure.

In FIG. 2, first, in block S202, a pre-stored orchestration file is read and parsed to determine all subpages to which a front-end application that is to be orchestrated refers.

The orchestration file is written in advance based on requirements of each front-end application that is to be orchestrated, and the orchestration file defines subpages to which one or more front-end applications respectively refer. In addition, the orchestration file may further define authentication and identification information, a rendering template, etc. of a front-end application. For each subpage, the orchestration file further defines metadata of the subpage which may specifically include a name of the subpage, a type of the subpage, a path, a configuration parameter, the authentication and identification information of the subpage, etc.

A specific example of a YAML-format orchestration file is shown below, and a person skilled in the art can understand that an orchestration language of the orchestration file is not limited to a YAML language and may alternatively use other formats, such as Json and XML.

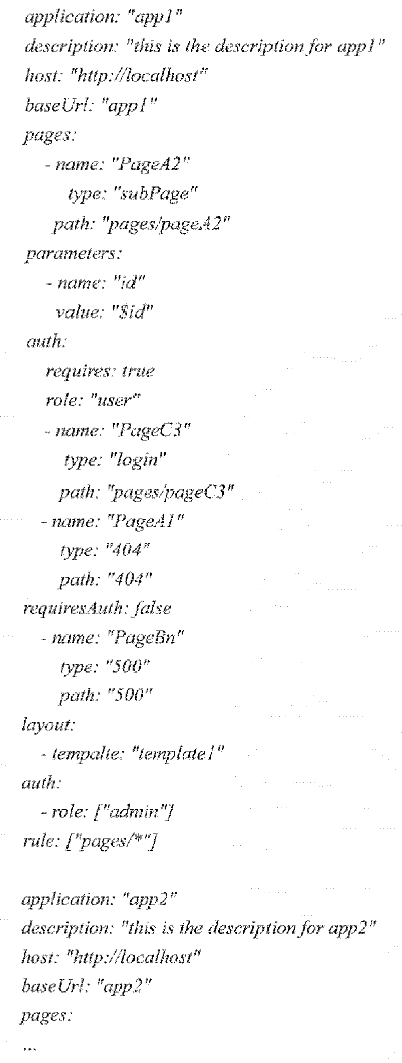

It can be learned from the above code of an orchestration file that one orchestration file can define a plurality of front-end applications, and for the front-end application "appl", may include definitions of description of the application, host, URL, and a plurality of subpages. For the subpage "PageA2", the orchestration file includes a name, type, route, parameter, authentication and identification information, etc. of the subpage.

A person skilled in the art can understand how to write an orchestration language based on the requirements. Details are not provided herein again.

In one example, before the operation in block S202 is performed, an initialization operation in S201 may be performed first.

In block S201, routes of a plurality of existing developed front-end applications are read and parsed, to extract metadata of a subpage of each existing front-end application and store the metadata as registration information.

It can be understood by a person skilled in the art that the extracted metadata of the subpage of each existing front-end application may be stored as registration information through the initialization operation in block S201. For example, the metadata may be stored in a database. When a front-end application is orchestrated, metadata of a related subpage can be queried directly in the database, without performing the operation in block S201 every time. The extracted metadata may alternatively be stored in, for example, a storage medium or be stored in other manners. According to the method in the present disclosure, a manner of storing the metadata is not limited.

For example, metadata of a subpage defined in the orchestration file may be determined based on the stored registration information of all the subpages.

Then, in block S204, for each subpage, metadata of the subpage is determined based on the orchestration file.

Specifically, a name of a subpage and a route of the subpage may be determined based on the orchestration file.

When the name and route of the subpage are determined, the subpage can be used for front-end application orchestration.

In one example, a value of a configuration parameter for the subpage may be determined based on the orchestration file, and/or authentication and identification information may be generated for each subpage.

After information about each subpage of the front-end application that is to be orchestrated is determined, an operation in block S106 may be performed, where the front-end application is orchestrated based on all the determined subpages.

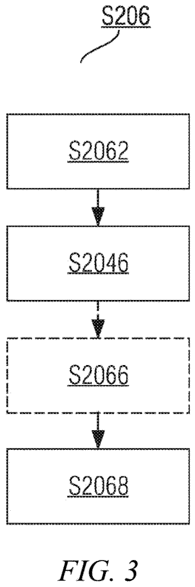

FIG. 3 is a flowchart of an exemplary process of an operation in block S206. As shown in FIG. 3, block S206 may include the following operations.

First, in block S2062, a framework of a main page of the front-end application may be generated based on a pre-stored application template or a user-defined application template.

The application template may include, for example, HTML document object model (DOM) elements, placeholders, and HTML styles.

Then, in block S2064, all the determined subpages are filled into a content area of the generated framework, and a route of each subpage is added to a navigation panel of the framework.

Further, in block S2068, a compiler corresponding to each subpage is invoked to compile the subpage, to generate a front-end application package that is to be deployed. It can be understood that for subpages from different existing applications, different compilers corresponding to the subpages are respectively used for compiling; and for one or more subpages belonging to the same existing application, a corresponding compiler may be used to separately compile each of the one or more subpages or compile the plurality of subpages together.

Optionally, before the operation in block S2068 is performed, an operation in S2066 may be performed: generating global identification and authentication information of the orchestrated front-end application.

In one example, the method 200 may further include an operation in S208 in which the generated front-end application package that is to be deployed may be deployed in an application container, to obtain a webpage front-end application; or the front-end application package may be deployed in a mobile application store, to obtain a front-end application on a mobile client.

According to the method in the present disclosure, there is provided a solution in which subpages from different front-end applications are used to orchestrate a front-end application, to build a micro-frontend architecture. Both earlier front-end applications developed using conventional languages and front-end applications developed lately using new languages may be used to build a composite front-end application. The front-end application built in this manner is easy to be managed and deployed, and can reduce development costs.

In addition, a front-end application orchestrated according to the method in the present disclosure is independent from a platform, and therefore can be run on a wide variety of types of front-end browsers.

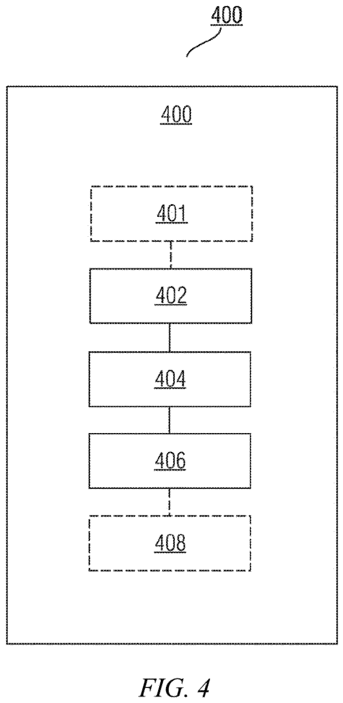

FIG. 4 is a block diagram of an exemplary configuration of a front-end application orchestration apparatus 500 according to an embodiment of the present disclosure.

The front-end application orchestration apparatus 400 includes a subpage determination unit 402, a metadata determination unit 404, and an orchestration unit 406.

The subpage determination unit 402 is configured to read and parse a pre-stored orchestration file, to determine all subpages to which a front-end application that is to be orchestrated refers.

The metadata determination unit 404 is configured to: for each subpage, determine metadata of the subpage based on the orchestration file.

The orchestration unit 406 is configured to orchestrate the front-end application based on all the determined subpages.

In one example, the apparatus 400 may further include an initialization unit 401 configured to parse a route of an existing front-end application, to extract metadata of a subpage of each existing front-end application and store the metadata as registration information.

In one example, the orchestration file defines a subpage to which at least one front-end application refers and metadata of each subpage, where the metadata of each subpage defined in the orchestration file is determined based on stored registration information.

In one example, the metadata determination unit 404 is further configured to: determine a name of the subpage and a route of the subpage based on the orchestration file.

In one example, the metadata determination unit 404 is further configured to perform at least one of the following operations: determining a value of a configuration parameter for the subpage based on the orchestration file; and
generating authentication and identification information for the subpage.

In one example, the orchestration unit 406 is further configured to:
generate a framework of a main page of the front-end application based on a pre-stored application template;
fill all the determined subpages into a content area of the framework, and add a route of each subpage to a navigation panel of the framework; and
invoke a compiler corresponding to each subpage to compile the subpage, to generate a front-end application package that is to be deployed.

In one example, the orchestration unit 406 is further configured to:
generate global identification and authentication information of the front-end application.

In one example, the front-end application orchestration apparatus 400 may further include a deployment unit 408 configured to deploy the front-end application package that is to be deployed in an application container or a mobile application store.

Details about operations and functions of various parts of the front-end application orchestration apparatus 400 may be the same as or similar to related parts in the embodiments of the front-end application orchestration method in the present disclosure described in conjunction with FIG. 1 to FIG. 3.

It should be further noted that the front-end application orchestration apparatus 400 and a structure of constituent units thereof shown in FIG. 4 are merely examples, and a person skilled in the art may modify the structural block diagram of FIG. 4 as required.

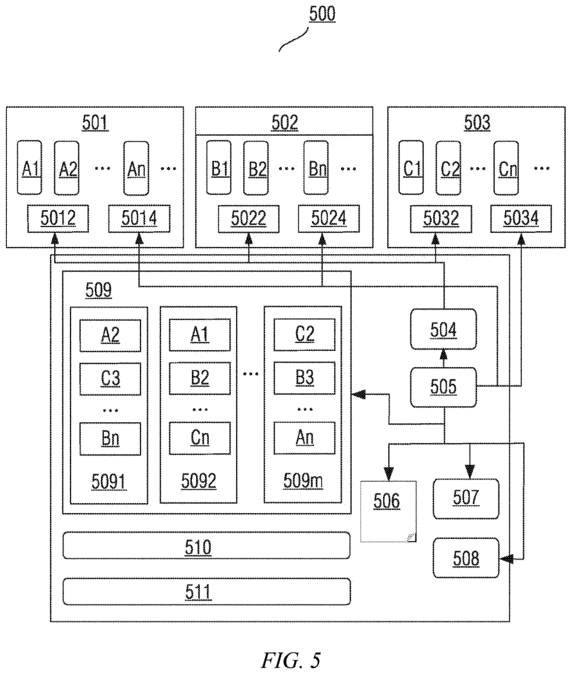

FIG. 5 is a schematic diagram of a specific example of a front-end application orchestration system 500 using a front-end application orchestration method according to the present disclosure to orchestrate a front-end application. A specific operation process of the front-end application orchestration system 500 is described below in detail in conjunction with FIG. 5.

Block 501, block 502, and block 503 in FIG. 5 each are an existing front-end application that has been developed, where the front-end application 501 includes subpages A1, A2, ..., and An, the front-end application 502 includes subpages B1, B2, ..., and Bn, and the front-end application 503 includes subpages C1, C2, ..., and Cn.

It can be understood that although FIG. 5 shows only three applications, in actual application, any number of existing front-end applications may be included. The number of front-end applications is not limited. Further, the number of subpages included in each front-end application may be different from each other.

First, respective routes 5012, 5022, and 5032 of the existing front-end applications 501, 502, and 503 are parsed to extract metadata of a subpage of each front-end application, and the metadata of these subpages is registered with a registration center 504. It can be understood that the registration center 504 may be a database which stores the metadata of all the subpages as registration information. The registration center 504 may provide an interface, to help other modules to extract data of a subpage therein.

Then, an orchestrator module 505 reads and parses an orchestration file 506, to determine all subpages to which a front-end application that is to be orchestrated refers, and obtains metadata of each subpage from the registration center 504. Specifically, a name of the subpage, a route of the subpage, and a value of a configuration parameter for the subpage may be determined, authentication and identification information of the subpage may be generated, and so on.

After the metadata of each subpage is determined, the subpages may be used to orchestrate the front-end application that needs to be orchestrated.

Specifically, the orchestrator module 505 may obtain a template from a layout module 507, and the layout module 507 may define many user-customized user interface modules, where the modules each have a unique name which can be referred to in the orchestration file. Each template may include HTML document object model (DOM) elements, placeholders, HTML styles, etc. The orchestrator module 505 may load a template, and generate a visualized application framework of a main page based on the template. Then, all the determined subpages may be filled into a content area of the framework, and a route of each subpage may be added to a navigation panel of the framework.

Further, global authentication and identification may be performed on the generated front-end application based on authentication and identification information in an identity and access management (IAM) module 508.

After this, the orchestrator module 605 may invoke respective compilers 5014, 5024, and 5034 of the existing front-end applications 501, 502, and 503 to compile corresponding subpages, to generate a deployable front-end application package.

Finally, the orchestrator module 505 may deploy the front-end application package in an application container 509. Front-end applications 5091, 5092, ..., and 509m are deployed in the application container 509 shown in FIG. 5. Taking the orchestrated front-end application 5091 as an example, it can be learned that the application includes the subpages A2, C3, ..., and Bn from the different existing front-end applications 501, 503, and 502.

After the deployment, a newly deployed front-end application may be accessed. Different pages of the newly deployed front-end application may communicate with each other via a message bus 510 based on an asynchronous event mechanism.

In addition, the system may further include a local memory 511 which can provide a mechanism of sharing data between subpages.

As described above, with reference to FIG. 1 to FIG. 5, the embodiments of the front-end application orchestration method and apparatus and the front-end application orchestration system according to the embodiments of the present disclosure are described. The above front-end application orchestration apparatus may be implemented by hardware, or may be implemented by software or a combination of hardware and software.

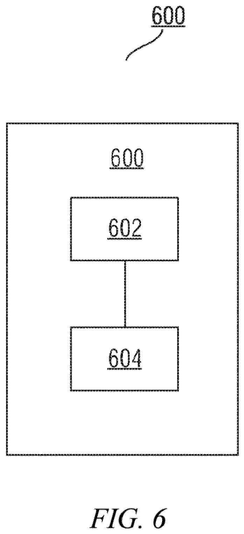

FIG. 6 is a block diagram of an electronic device 600 for implementing front-end application orchestration according to an embodiment of the present disclosure. According to one embodiment, the electronic device 600 may include at least one processor 602, and the processor 602 executes at least one computer-readable instruction (i.e., the above element implemented in the form of software) stored or encoded in a computer-readable storage medium (i.e., a memory 604).

In an embodiment, the memory 604 stores computer executable instructions that, when executed, cause the at least one processor 602 to complete the following actions: reading and parsing a pre-stored orchestration file, to determine all subpages to which a front-end application that is to be orchestrated refers; for each subpage, determining metadata of the subpage based on the orchestration file; and orchestrating the front-end application based on all the determined subpages.

It should be understood that the computer executable instructions stored in the memory 604, when executed, cause the at least one processor 602 to perform various operations and functions described above in conjunction with FIG. 1 to FIG. 5 in the embodiments of the present disclosure.

According to an embodiment, a non-transitory machine-readable medium is provided. The non-transitory machine-readable medium may include machine executable instructions (i.e., the above elements implemented in the form of software) that, when executed by a machine, cause the machine to perform various operations and functions described above in conjunction with FIG. 1 to FIG. 5 in the embodiments of the present disclosure.

According to an embodiment, a computer program is provided, which includes computer executable instructions that, when executed, cause at least one processor to perform various operations and functions described above in conjunction with FIG. 1 to FIG. 5 in the embodiments of the present disclosure.

According to an embodiment, a computer program product is provided, which includes computer executable instructions that, when executed, cause at least one processor to perform various operations and functions described above in conjunction with FIG. 1 to FIG. 5 in the embodiments of the present disclosure.

Exemplary embodiments are described above in combination with the specific embodiments described in the accompanying drawings, but do not represent all the embodiments that can be implemented or fall within the protective scope of the claims. The term "exemplary" used throughout the present specification means "used as an example, an instance or an illustration", but does not mean "preferred" or "advantageous" over the other embodiments. For the purpose of providing an understanding of the described technologies, the specific embodiments include specific details. However, the technologies can be implemented without the specific details. In some embodiments, in order to avoid obscuring the described concepts in the embodiments, commonly known structures and apparatuses are shown in the form of a block diagram.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants without departing from the protective scope of the present disclosure. Therefore, the present disclosure is not limited to the examples and designs described herein, and corresponds to the widest scope in accordance with the principles and novel features disclosed herein.

## Claims

1. A front-end application orchestration method, comprising:
reading and parsing a pre-stored orchestration file, to determine all subpages to which a front-end application that is to be orchestrated refers;
for each subpage, determining metadata of the subpage based on the orchestration file; and
orchestrating the front-end application based on all the determined subpages.

2. The method as claimed in claim 1, wherein before reading and parsing a pre-stored orchestration file, the method further comprises:
parsing a route of an existing front-end application to extract metadata of a subpage of each existing front-end application and store the metadata as registration information.

3. The method as claimed in claim 2, wherein the orchestration file defines a subpage to which at least one front-end application refers and metadata of each subpage, wherein the metadata of each subpage defined in the orchestration file is determined based on stored registration information.

4. The method as claimed in any one of claims 1 to 3, wherein the determining metadata of the subpage based on the orchestration file at least comprises:
determining a name of the subpage and a route of the subpage based on the orchestration file.

5. The method as claimed in claim 4, wherein the determining metadata of the subpage based on the orchestration file further comprises at least one of the following operations:
determining a value of a configuration parameter for the subpage based on the orchestration file; and
generating authentication and identification information for the subpage.

6. The method as claimed in any one of claims 1 to 3, wherein orchestrating the front-end application based on all the determined subpages comprises:
generating a framework of a main page of the front-end application based on a pre-stored application template or a user-defined application template;
filling all the determined subpages into a content area of the framework, and adding a route of each subpage to a navigation panel of the framework; and
invoking a compiler corresponding to each subpage to compile the subpage, to generate a front-end application package that is to be deployed.

7. The method as claimed in claim 6, wherein before the front-end application package that is to be deployed is generated, the orchestrating the front-end application based on all the determined subpages further comprises:
generating global identification and authentication information of the front-end application.

8. The method as claimed in claim 6, further comprising:
deploying the front-end application package that is to be deployed in an application container or a mobile application store.

9. A front-end application orchestration apparatus (400), comprising:
a subpage determination unit (402) configured to read and parse a pre-stored orchestration file, to determine all subpages to which a front-end application that is to be orchestrated refers;
a metadata determination unit (404) configured to: for each subpage, determine metadata of the subpage based on the orchestration file; and
an orchestration unit (406) configured to orchestrate the front-end application based on all the determined subpages.

10. The apparatus (400) as claimed in claim 9, further comprising: an initialization unit (401) configured to parse a route of an existing front-end application, to extract metadata of a subpage of each existing front-end application and store the metadata as registration information.

11. The apparatus (400) as claimed in claim 10, wherein the orchestration file defines a subpage to which at least one front-end application refers and metadata of each subpage, wherein the metadata of each subpage defined in the orchestration file is determined based on stored registration information.

12. The apparatus (400) as claimed in any one of claims 9 to 11, wherein the metadata determination unit (404) is further configured to:
determine a name of the subpage and a route of the subpage based on the orchestration file.

13. The apparatus (400) as claimed in claim 12, wherein the metadata determination unit (404) is further configured to perform at least one of the following operations:
determining a value of a configuration parameter for the subpage based on the orchestration file; and
generating authentication and identification information for the subpage.

14. The apparatus (400) as claimed in any one of claims 9 to 11, wherein the orchestration unit (406) is further configured to:
generate a framework of a main page of the front-end application based on a pre-stored application template or a user-defined application template;
fill all the determined subpages into a content area of the framework, and add a route of each subpage to a navigation panel of the framework; and
invoke a compiler corresponding to each subpage to compile the subpage, to generate a front-end application package that is to be deployed.

15. The apparatus (400) as claimed in claim 14, wherein the orchestration unit (406) is further configured to:
generate global identification and authentication information of the front-end application.

16. The apparatus as claimed in claim 15, further comprising: a deployment unit (408) configured to deploy the front-end application package that is to be deployed in an application container or a mobile application store.

17. An electronic device (600), comprising:
at least one processor (602); and
a memory (604) coupled to the at least one processor (602), wherein the memory is configured to store instructions that, when executed by the at least one processor (602), cause the processor (602) to perform the method as claimed in any one of claims 1 to 8.

18. A non-transitory machine-readable storage medium storing executable instructions that, when executed, cause the machine to perform the method as claimed in any one of claims 1 to 8.

19. A computer program, comprising computer executable instructions that, when executed, cause at least one processor to perform the method as claimed in any one of claims 1 to 8.

20. A computer program product tangibly stored on a computer-readable medium, and comprising computer executable instructions that, when executed, cause at least one processor to perform the method as claimed in any one of claims 1 to 8.
